# EUROPÄISCHE PATENTSCHRIFT

(11) **EP 4 278 882 B1**
(45) Veröffentlichungstag und Bekanntmachung des Hinweises auf die Patenterteilung: **11.03.2026**
(21) Anmeldenummer: 23173696.8
(22) Anmeldetag: 16.05.2023
(51) Int. Cl.: A01D 34/135, A01D 41/14

(54) **SCHNEIDWERK MIT DOPPELMESSERSYSTEM UND BEWEGLICHER GLEITFLÄCHE**
CUTTING ASSEMBLY WITH DOUBLE BLADE SYSTEM AND MOVABLE SLIDING SURFACE
BARRE DE COUPE DOTÉE D'UN SYSTÈME À DOUBLE COUTEAU ET D'UNE SURFACE DE GLISSEMENT MOBILE

(30) Priorität: 20.05.2022 DE 102022112818
(43) Veröffentlichungstag der Anmeldung: 22.11.2023
(73) Patentinhaber: Carl Geringhoff GmbH & Co. Kommanditgesellschaft, 59227 Ahlen (DE)
(72) Erfinder: Brox, Christian, 59387 Ascheberg (DE); Webermann, Dirk, 48308 Senden (DE); Sudhues, Steffen, 59227 Ahlen (DE); Pokriefke, Michael, 27798 Hude (DE)
(74) Vertreter: Weeg, Thomas

(56) Entgegenhaltungen:
- EP-A1- 3 424 292
- EP-A1- 3 881 664
- DE-A1- 10 246 558
- DE-A1- 102011 016 618
- IT-A1- RE20 100 023
- US-A1- 2018 192 581

## Beschreibung

Die vorliegende Erfindung bezieht sich auf ein Schneidwerk zum Anbau an einen Mähdrescher mit den Merkmalen des Oberbegriffs des Anspruchs 1.

Ein Schneidwerk ist aus der Schrift DE 10 2015 110 746 A1 bekannt. Dort ist ein Draper-Schneidwerk offenbart, dessen Ablagefläche auf der jeweils nach oben weisenden Seite mehrerer umlaufend angetriebenen Bandförderer ausgebildet ist. Das Schneidwerk ist mit einem Messerbalken versehen, an dem feststehende, am Messerbalken montierte Messerklingen mit Messerklingen interagieren, die an einer quer zu Arbeitsrichtung des Schneidwerks angeordneten Hubstange angebracht sind, die in Erstreckungsrichtung oszillierend beweglich angetrieben ist. Durch die Berührung der Halme und/oder Fruchtstände des Ernteguts mit Teilen des Schneidwerks, wie beispielsweise Halmteilern, dem Messerbalken, der Haspel oder anderen Bauteilen, kann es bei sehr reifen und trockenen Halmfrüchten passieren, dass sich Körner von den Fruchtständen des Halmguts unmittelbar lösen und zu Boden fallen, bevor sie von der Ablagefläche aufgefangen werden. Solche am Boden liegenden Körner können nicht mehr in den Erntegutstrom zurückgeholt werden und sind als Ernteertrag verloren. Es geschieht auch, dass Körner zwar noch auf die Ablagefläche fallen, diese dann aber nach vorne von der Ablagefläche herab auf den Boden fallen und dadurch ebenfalls als Ernteertrag verloren sind. Genauso kann es passieren, dass geschnittenes Halmgut zwar sauber auf der Ablagefläche abgelegt wird, sich dabei aber Körner ablösen und nach vorne hin vom Schneidwerk herunterfallen. Schließlich werden als Halmgut auch Früchte geerntet, die in Schoten heranwachsen, wie beispielsweise Hülsenfrüchte wie Sojabohnen oder Raps. Bei der Ernte, insbesondere dem Schnitt und dem nachfolgenden Ablegen und Fördern des geschnittenen Ernteguts auf der Bandfördervorrichtung platzen die Schoten auf, und dabei werden die Körner in die Umgebung geschleudert. Auch dadurch können Körner als Erntegut von der Bandfördervorrichtung auf den Ackerboden herabfallen und als Ernteertrag verloren gehen.

Um die Körnerverluste im Bereich des Messerbalkens zu verringern, wird in der Schrift DE 10 2015 110 746 A1 vorgeschlagen, im Übergangsbereich vom Messerbalken zur Ablagefläche eine Gleitfläche auszubilden, die schräg in Förderrichtung des Ernteguts geneigt ausgebildet ist, und in der Gleitfläche Luftaustrittsöffnungen vorzusehen, aus denen ein aufwärts gerichteter Luftstrom austritt, der herabfallende Körner auffängt und auf die Ablagefläche bläst. Die Arbeitsergebnisse dieser Lösung erscheinen in besonders schwierigen Erntebedingungen aber noch verbesserungsfähig.

Aus der Schrift DE 10 2018 119 326 B3 ist ein Doppelmesser-Schnittsystem bekannt, bei dem nicht nur eine Hubstange mit den daran befestigten Messerklingen, sondern zwei Hubstangen, die mit den daran befestigten Messerklingen ein Ober- und ein Untermesser bilden, eingesetzt werden. Das Ober- und Untermesser sind gegenläufig beweglich angetrieben.

Aus den Schriften IT RE20 100 023 A1 und DE 102 46 558 A1 sind Mähbalken mit Doppelmesser-Schnittsystemen für die Grasernte bekannt. Die Schrift DE 10 2011 016 618 A zeigt ein Rapstrennmesser mit einem Doppelmesser-Schnittsystem, das in vertikaler Ausrichtung an ein Getreideschneidwerk anbaubar ist. In den Schriften EP 3 424 292 A1 und US 2018/0192581 A1 sind Getreideschneidwerke offenbart, die das Getreide mit einem oszillierend angetriebenen Messerbalken schneiden, dessen Messer jeweils mit einem zugeordneten feststehenden Messerfinger interagieren. Die Schriften geben keine konkreten Hinweise, wie Körnerverluste im Bereich des Messerbalkens verringert werden können. EP 3 881 664 A1 zeigt eine Mähmesservorrichtung mit einem Messerbalken, und einem Doppelmesser-Schneidsystem, wobei das Doppelmesser-Schneidsystem ein oberes Schneidmesser und ein unteres Schneidmesser umfasst.

Es ist die Aufgabe der vorliegenden Erfindung, die Körnerverluste im Übergangsbereich zwischen dem Messerbalken und der Ablagefläche auch in besonders schwierigen Erntebedingungen zu verbessern.

Die Aufgabe wird für ein gattungsgemäßes Schneidwerk mit den kennzeichnenden Merkmalen des Anspruchs 1 gelöst.

Bei der Verwendung eines Doppelmesser-Schnittsystems kann auf Ährenheber und Messerfinger, in denen die Hubstange und die daran befestigten Messerklingen geführt sind, verzichtet werden. Da bei einem Doppelmesser-Schnittsystem sowohl das Ober- als auch das Untermesser oszillierend beweglich angetrieben sind, verkürzen sich deren Hubwege, die Bewegungsgeschwindigkeiten sind niedriger. Daraus resultiert eine größere Laufruhe des Schnittsystems, wodurch beim Schnitt des Ernteguts weniger Körner aus den Ähren herausgeschüttelt werden. Zudem ist der Schnitt selbst sauberer und glatter, wodurch die Stängel des Ernteguts ebenfalls weniger bewegt werden.

Die Messerklingen eines Doppelmesser-Schnittsystems können auch tiefer am Schneidwerk montiert werden als die Messerklingen eines herkömmlichen Schnittsystems mit einer einfachen Hubstange, weil beim Doppelmesser-Schnittsystem keine Ährenheber und Messerfinger erforderlich sind. Das Schneidwerk selbst kann dichter am Boden gefahren werden, weil sich die Messerklingen eines Doppelmesser-Schnittsystems selbst reinigen und nicht mit Erde zustopfen, wenn sie einen Bodenkontakt gehabt haben. Daraus resultiert ein längerer Fallweg von losen Körnern, der dazu führen kann, dass die losen Körner schon auf der sich bei der Vorfahrt der Erntemaschine kontinuierlich unter das geschnittene Erntegut schiebenden Ablagefläche und nicht noch auf dem Ackerboden landen, bevor die Ablagefläche die Falllinie des fallenden Korns erreicht. Wenn die Bewegungsgeschwindigkeit des Ober- und Untermessers bei halbem Hubweg größer als halb so schnell wie die herkömmlichen Schnittsysteme mit einer oszillierenden Hubstange ist, kann bei der Ernte mit einem mit Doppelmesser-Schnittsystem ausgestatteten Schneidwerk schneller gefahren werden als mit einem herkömmlichen Schneidwerk, ohne Schnittverluste befürchten zu müssen, wodurch die Ablagefläche nochmals schneller unter die fallenden Körner geschoben wird, wodurch sich die Verluste am Schneidwerk nochmals verringern.

Zusätzlich ist es vorteilhaft, die als Leiste ausgebildete Gleitfläche ortsfest mit dem Obermesser zu verbinden, so dass sich diese mit den oszillierenden Bewegungen des Obermessers mitbewegt. Die Leiste und damit auch die Gleitfläche führt bei der Erntearbeit zusammen mit dem Obermesser eine Schüttelbewegung aus, durch die Erntegut, das auf die Gleitfläche fällt, bei dem Kontakt ebenfalls einen Bewegungsimpuls in die jeweilige Bewegungsrichtung des Obermessers mitbekommt. Da sich das Obermesser sehr schnell bewegt und dabei auch ständig an den Hublagenenden die Bewegungsgeschwindigkeit verringert und wieder beschleunigt und dabei auch immer die Bewegungsrichtung wechselt, vibriert das herabfallende Erntegut auf der Gleitfläche und haftet nicht daran an. Da herabfallendes Erntegut auf diese Weise beabstandet zur Gleitfläche in der Schwebe gehalten wird, kann es dort leichter von weiterem geschnittenem und an der Gleitfläche vorbeistreifendem Erntegut mitgenommen und auf die Ablagefläche befördert werden. Die mit dem Obermesser mitbewegte Gleitfläche verringert dadurch ebenfalls die Körnerverluste des Schneidwerks im Bereich des Schnittsystems. Die Leiste kann sich einstückig über die gesamte Arbeitsbreite des Schneidwerks erstrecken, die Leiste kann aber auch in mehrere Teile unterteilt sein, die aneinandergereiht auf das Obermesser aufgesetzt sind. Auch das Obermesser kann in Teile segmentiert sein, wobei es möglich ist, die Segmente des Obermessers und der Leistenteile gleich breit auszugestalten. Die Leiste kann zum Obermesser und zum Messerbalken, der Ablagefläche und/oder zu benachbarten Leistenteilen bei einer segmentierten Leiste hin besonders abgedichtet sein, beispielsweise durch eine Dichtungslage aus einem elastomeren Material, um den Durchtritt von Erntegut durch die dann abgedichteten Schlitze und Fugen zu vermindern oder ganz zu unterbinden.

In der Kombination eines Doppelmesser-Schnittsystems mit einer ortsfest mit dem Obermesser verbundenen Gleitfläche ist es möglich, die Körnerverluste im Schnittbereich des Schneidwerks insbesondere unter schwierigen Erntebedingungen zu verringern. Das geschnittene Erntegut haftet weniger an der Gleitfläche an, fließt leichter in Richtung der Ablagefläche und wird insgesamt besser in Richtung der Ablagefläche des Schneidwerks abgefördert.

Die Erfindung ist sowohl bei Draper-Schneidwerken als auch anderen Schneidwerken mit einer starren Ablagefläche und darüberstreichenden Fördervorrichtungen, wie beispielsweise einer Förderschnecke, umsetzbar. Als Fördervorrichtung kann am Schneidwerk zusätzlich eine rotierend angetriebene und höhen- und längenmäßig verstellbare Haspel vorgesehen sein, die oberhalb und über dem Messerbalken positioniert ist und mit der das geschnittene Erntegut in Richtung der Ablagefläche abgeworfen wird. Die Haspel stabilisiert und beruhigt das Erntegut in dessen oberem Bereich, wenn es geschnitten wird, und schubst das geschnittene Erntegut in die Richtung der Ablagefläche, wenn der Schnitt erfolgt ist und das Erntegut in diesem Moment auf den Ackerboden zu fallen droht. Die mit der Erntemaschine kontinuierlich in den zu erntenden Bestand des Ernteguts vorwärts bewegte Gleitfläche schubst dabei zeitgleich die unteren Teile der geschnittenen Pflanzen in die Arbeitsrichtung der Erntemaschine, so dass sich das Erntegut in einer Kippbewegung auf die Ablagefläche zu neigt und ohne Schnittverluste auf der Ablagefläche zu liegen kommt. Durch die Vibration der Gleitfläche haftet das Erntegut nicht daran an, so dass der Förderimpuls der Haspel auf das geschnittene Erntegut in Richtung der Ablagefläche nicht von der Gleitfläche abgebremst wird.

Nach einer Ausgestaltung der Erfindung sind die Ober- und Untermesser über ihre Länge in Erstreckungsrichtung hinweg an den freien Enden von mehreren mit dem Rahmen verbundenen Haltearmen gehalten, die mit ihren freien Enden in voneinander unterschiedliche Höhenlagen beweglich sind. Bei dieser Befestigungsweise kann sich das Schnittsystem quer über die Arbeitsbreite des Schneidwerks flexibel zumindest näherungsweise an eine unebene Bodenkontur anpassen, indem sich die freien Enden der Haltearme je nach Oberflächenkontur des soeben überfahrenen Ackerbodens im Bereich des entsprechenden Haltearms nach oben oder unten bewegen oder bei einer ebenen Bodenfläche in ihrer aktuellen Position verbleiben. Die Haltearme können beispielsweise an ihrem rahmenseitigen Ende in einem Drehlager gelagert sein, oder die Haltearme sind als am Rahmen festgelegte Blattfedern ausgebildet, was entsprechende Federbewegungen am freien Ende der Blattfeder ermöglicht. Bei Bewegungen der freien Enden der Haltearme bewegt sich der von einem entsprechenden Haltearm gehaltene Abschnitt der Ober- und Untermesser sowie die mit dem Obermesser fest verbundene Leiste mit der Gleitfläche mit nach oben oder unten. Bei Lagergetreide oder anderem bodennah zu schneidendem Erntegut kann dieses dadurch gut unterschnitten und bodennah abgeschnitten werden, auch wenn sich bereichsweise Bodenabsenkungen oder -erhebungen innerhalb der Arbeitsbreite des Schneidwerks befinden. Da sich die Leiste zusammen mit dem Obermesser bewegt, folgt auch die Gleitfläche den Bewegungen, mit denen sich die Ober- und Untermesser einer unebenen Bodenkontur anpassen, wenn das Schneidwerk beim Ernten über den Ackerboden bewegt wird. Insbesondere die Messerrücken der Ober- und Untermesser sind dabei ebenfalls ausreichend flexibel ausgestaltet, so dass sie sich entsprechend der Bodenkontur anpassen können.

Nach einer Ausgestaltung der Erfindung ist die Ablagefläche auf der nach oben weisenden Seite eines oder mehrerer umlaufend angetriebenen Bandförderer ausgebildet. Bei einer solchen Ausgestaltung des Schneidwerks ist dieses insbesondere ein Draper-Schneidwerk, das über die gesamte Fläche der Oberseiten der Bandförderer förderaktiv ist. Da die umlaufenden Bänder der Bandförderer in einem oberen und einem unteren Trum um seitliche Umlenkrollen umlaufen und aus diesem Grund eine unvermeidbar höher aufragende Bauhöhe aufweisen als beispielsweise eine aus Blech geformte Schneidwerksmulde, ist es bei solchen Draper-Schneidwerken besonders hilfreich, einen Höhenversatz zwischen dem Schnittsystem und der Oberfläche des oberen Trums des Bandförderers mit einer Gleitfläche zu überwinden, die so ausgestaltet ist, dass sie möglichst geringe Körnerverluste verursacht.

Nach einer Ausgestaltung der Erfindung weist die Leiste quer über die Arbeitsbreite verteilt eine Anzahl von Luftaustrittsöffnungen auf, die nach oben und/oder in Richtung der Ablagefläche ausgerichtet sind. Durch die Luftaustrittsöffnungen kann ein Luftstrom austreten, der das geschnittene oder aus den Ähren herausgeschüttelte Erntegut erfasst und in Richtung der Ablagefläche befördert. Das Verlustniveau des Schneidwerks kann durch die Luftaustrittsöffnungen verringert werden.

Nach einer Ausgestaltung der Erfindung sind in der Leiste in den Bereichen, in denen sich Schwinghebel befinden, jeweils Abdeckungen ausgeformt, die die Schwinghebel gegen Erntegut und Schmutz abschirmen. Die Gelenke der Schwinghebel sind dadurch weniger verschleißbehaftet.

Nach einer Ausgestaltung der Erfindung ist das Schneidwerk mehrteilig und die Leiste an den Nahtstellen zwischen den Schneidwerksteilen flexibel und/oder geteilt ausgebildet. Bei einem mehrteiligen Schneidwerk ist der Rahmen nicht einteilig und starr ausgebildet, sondern er verfügt über mehrere Rahmenteile, die relativ beweglich zueinander ausgebildet sind und mit ihrer Baubreite jeweils nur eine Teilbreite der Gesamtarbeitsbreite des Schneidwerks abdecken. Die einzelnen Rahmenteile können sich auf diese Weise besser einer Bodenkontur anpassen. Wenn die Leiste zumindest an den Nahtstellen flexibel und/oder geteilt ausgebildet ist, behindert sie die Anpassungsbewegungen der einzelnen Rahmenteile an eine wechselnde Bodenkontur nicht, kann aber gleichwohl auch an den Nahtstellen eine vollständige und sichere Übergabe des Ernteguts auf die Ablagefläche unterstützen, ohne dass dadurch das Risiko von Körnerverlusten im Übergangsbereich zwischen dem Messerbalken und der Ablagefläche signifikant erhöht wäre.

Nach einer Ausgestaltung der Erfindung sind das Ober- und Untermesser des Doppelmesser-Schnittsystems über Schwinghebel mit einem Getriebe antriebsverbunden, das an einer Stelle zwischen den Seitenwänden des Schneidwerks angeordnet ist. Üblicherweise werden Messerbalken eines Schneidwerks von außen über im Bereich der Seitenwände angeordnete Getriebe angetrieben. Bei einem Mittenantrieb der Ober- und Untermesser des Doppelmesser-Schnittsystems ergibt sich eine gleichmäßigere Kraftverteilung der Antriebskraft über die Arbeitsbreite der Ober- und Untermesser im Schneidwerk. Die Antriebswellen und/oder Hydraulikschläuche, mit denen die Antriebskraft von einer erntemaschinenseitigen Antriebsquelle durch das Schneidwerk hindurch zum Getriebe geleitet wird, können näher zur Schneidwerksmitte hin im Schneidwerk angeordnet werden. Wenn diese zu den äußeren Schneidwerksseiten geführt werden müssten, wäre der Rahmen mit entsprechend höheren Gewichten und Hebelkräften belastet. Das wird durch die stärker zentrierte Anordnung des Getriebes vermieden. Das Getriebe muss dabei nicht geometrisch genau mittig im Schneidwerk angeordnet sein, ein seitlicher Versatz zur Mitte ist möglich. Es können auch mehrere Getriebe vorgesehen sein, die jeweils einen Satz von Ober- und Untermessern antreiben, die sich nur über eine Teilarbeitsbreite des Schneidwerks hinweg erstecken. So können beispielsweise für ein 12 m breites Schneidwerk zwei Getriebe vorhanden sein, die jeweils einen Satz von 6 m breiten Ober- und Untermessern antreiben, wobei die Getriebe beispielsweise an einer von den Seitenwänden um 3 m oder 4 m nach innen versetzten Position angeordnet sind. Es kann auch ein an einer Stelle zwischen den Seitenwänden angeordnetes erstes Getriebe vorhanden sein, mit dem nur das Obermesser angetrieben wird, und an einer anderen Stelle zwischen den Seitenwänden ein zweites Getriebe, mit dem nur das Untermesser angetrieben wird.

Nach einer Ausgestaltung der Erfindung sind die Abtriebswellen zum Antrieb der Schwinghebel auf der Oberseite des Getriebes aus dem Getriebegehäuse nach außen geführt und die Schwinghebel erstrecken sich in einer Ebene oberhalb der Ebene der Ober- und Untermesser von den Abtriebswellen in die Richtung der Ober- und Untermesser. Durch die Anordnung des Antriebsstrangs vom Getriebe zu den Ober- und Untermessern oberhalb der Ebene der Ober- und Untermesser können die Ober- und Untermesser sehr tief unten am Messerbalken in das Schneidwerk eingebaut werden, das Schneidwerk selbst bleibt unterhalb der Ebene der Ober- und Untermesser sehr flach bauend, so dass die Ober- und Untermesser im Erntebetrieb sehr dicht an der Bodenoberfläche geführt werden können, die Ober- und Untermesser sind in dieser Einbaulage einer geringeren Gefahr von Beschädigungen ausgesetzt, weil dort das Kollisionsrisiko mit Hindernissen vermindert ist, und der Gutfluss wird durch diese Einbaulage kaum behindert, weil die Schwinghebel sehr kompakt bauen.

Nach einer Ausgestaltung der Erfindung weist der Antriebsstrang von der Abtriebswelle zum Untermesser einen Abschnitt auf, in dem der Schwinghebel das Obermesser bereichsweise umgreift. Dieser Abschnitt stützt das Obermesser nach hinten hin in einer Richtung entgegen der Arbeitsrichtung ab und hält dabei das Ober- und Untermesser aufeinander. Das Untermesser kann dabei mit dem unteren Teil des umgreifenden Abschnitts fest verbunden sein, so dass sich beim Betrieb des Schneidwerks das Untermesser gleichsinnig mit dem umgreifenden Abschnitt bewegt, das Obermesser aber zumindest zeitweise gegensinnig. Der Abschnitt kann leistenförmig ausgebildet sein, so dass sich die Abstütz- und Anpresswirkung nicht nur punktuell, sondern über die Länge des umgreifenden Abschnitts einstellt.

Nach einer Ausgestaltung der Erfindung sind das Obermesser und das Untermesser an Schwinghebeln gehalten, die zwischen ihrer schneidwerksseitigen Drehachse und der Drehachse, über die sie mit dem Obermesser oder dem Untermesser verbunden sind, dieselbe Länge aufweisen wie die Schwinghebel, über die das Obermesser und das Untermesser mit dem Getriebe verbunden sind. Durch die gleiche Länge der Schwinghebel, die für den Antrieb der Ober- und Untermesser und für deren Halterung verwendet sind, und dadurch bedingt den gleichen Radius, mit dem die Schwinghebel um ihre Drehachse drehen, bewegen sich die Ober- und Untermesser sehr laufruhig. Es werden auch Biegekräfte in den Ober- und Untermessern vermieden, die auftreten können, wenn Schwinghebel mit einer unterschiedlichen Länge verwendet werden.

Nach einer Ausgestaltung der Erfindung sind das Obermesser haltende und das Untermesser haltende Schwinghebel mit ihren jeweils schneidwerksseitigen Drehachsen konzentrisch zueinander auf einer Lagerstelle angeordnet. Jeweils ein Schwinghebel für das Obermesser und ein Schwinghebel für das Untermesser bilden ein Paar von Schwinghebeln, die konzentrisch zueinander angeordnet sind. Es können mehrere Paare von Schwinghebeln oder alle Paare von Schwinghebeln über die Schneidwerksbreite verteilt mit konzentrisch zueinander angeordneten Drehachsen versehen sein. Die auf die Ober- und Untermesser einwirkenden Haltekräfte unterscheiden sich dadurch nicht. An jeder Position, an der die Ober- und Untermesser mit dem Schneidwerk verbunden sind, genügt eine Lagerstelle für die Lagerung beider Schwinghebel, wodurch sich der Bauaufwand verringert. Nach einem Baukastensystem können identische Schwinghebel zur Halterung der Ober- und Untermesser verwendet werden.

Nach einer Ausgestaltung der Erfindung weisen die Schwinghebel an ihren rahmen- und/oder messerseitigen Ende ein Rückstellkräfte aufbauendes Pufferelement auf. Das Pufferelement kann beispielsweise ein Formteil aus einem elastomeren Material wie einem Natur- oder Synthesekautschuk sein, das insbesondere in den Endlagen des zugehörigen Schwinghebels Kraftspitzen aufnimmt und die dabei aufgebauten Rückstellkräfte wieder abgibt, wenn sich der Schwinghebel wieder in die entgegengesetzte Richtung bewegt. Das Doppelmesser-Schnittsystem ist dadurch laufruhiger und langlebiger, und das Risiko von Beschädigungen durch Fremdkörper, die sich zwischen den Messerklingen einklemmen, ist geringer, weil Kraftspitzen von den Pufferelementen aufgenommen werden. Anstelle eine Pufferelements aus einem elastomeren Material können auch metallische Federn als Pufferelement verwendet werden.

Nach einer Ausgestaltung der Erfindung sind die Messerklingen mit einer unterschiedlichen Klingenteilung am Ober- und Untermesser angeordnet. Durch die unterschiedlichen Abstände der an den Ober- und Untermessern angeordneten Klingen verteilen sich die durch einen jeweiligen Schnitt an einer Schnittstelle zwischen den Messerklingen auftretenden Kraftspitzen über eine Umdrehung des Getriebes auf mehrere Winkelgrade einer Umdrehung verteilt, so dass sich nicht eine größere Zahl oder alle von Schnitten an Messerpaarungen auftretenden Kraftspitzen an einem Winkelgrad aufsummieren. Der Antriebsstrang wird dadurch geschont, er kann auf geringere Kräfte ausgelegt werden und er kann laufruhiger betrieben werden. Weitere Merkmale der Erfindung ergeben sich aus den Ansprüchen, den Figuren und der Figurenbeschreibung.

Die Erfindung wird nun anhand eines bevorzugten Ausführungsbeispiels sowie unter Bezugnahme auf die beigefügten Zeichnungen näher erläutert.

Es zeigen:
- Fig. 1:: eine Ansicht auf ein Schneidwerk aus einer Ansicht von schräg vorne,
- Fig. 2:: eine vergrößerte Ausschnittansicht auf das Doppelmesser-Schnittsystem,
- Fig. 3:: die an den freien Enden von mehreren mit dem Rahmen verbundenen Haltearmen gehaltenen Ober- und Untermesser,
- Fig. 4:: eine vergrößerte Ansicht auf den Bereich des Messerbalkens, in dem ein Getriebe angeordnet ist, und
- Fig. 5:: eine Schnittansicht durch den Bereich des Messerbalkens.

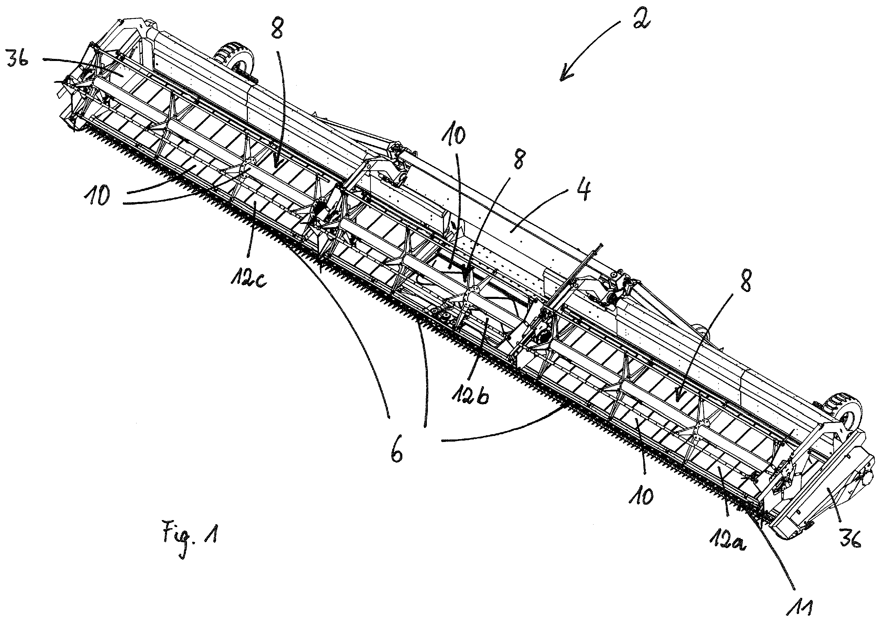

In Fig. 1 ist eine Ansicht auf ein Schneidwerk 2 aus einer Ansicht von schräg vorne gezeigt. Das Schneidwerk 2 ist mehrteilig mit einem Mittel- und zwei im Verhältnis dazu verschwenkbaren Seitenteilen ausgeführt und verfügt über einen Rahmen 4, mit dem der Messerbalken 6 verbunden ist. Das vom Messerbalken 6 geschnittene Erntegut wird auf der Ablagefläche 8 abgelegt und von dort mittels einer oder mehrerer Fördervorrichtungen 10 abgefördert.

Im Ausführungsbeispiel befindet sich die Ablagefläche 8 auf insgesamt drei Bandförderern 12a, 12b, 12c, von denen die beiden seitlichen Bandförderer 12a, 12c bei der Erntearbeit das geschnittene und auf ihnen abgelegte Erntegut von außen nach innen auf den mittleren Bandförderer 12b befördern und dieser das darauf abgelegte Erntegut nach hinten in Richtung des Schrägförderers eines mit dem Schneidwerk 2 verbundenen Mähdreschers abfördert. Die Bandförderer 12 bilden durch ihre Funktionsweise nicht nur die Ablagefläche 8 aus, sondern sind gleichzeitig auch Fördervorrichtungen 10. Ein Beispiel für eine weitere Fördervorrichtung 10 stellt die Haspel dar, die rotierend antreibbar über und oberhalb des Messerbalkens 6 angeordnet ist. Sie taucht mit den Haspelzinken bei der Erntearbeit in den Bestand des zu erntenden Getreides ein und bewegt das geschnittene Getreide in die Richtung der Ablagefläche 8. Das Schneidwerk 2 verfügt über eine Antriebsvorrichtung, mit der eine Antriebskraft auf das Doppelmesser-Schnittsystem 11 mit dem Obermesser 22 und dem Untermesser 24 und die Fördervorrichtungen 10 übertragen wird. An den seitlichen Enden des Schneidwerks 2 befinden sich die Seitenwände 36, die gleichzeitig die Arbeitsbreite des Schneidwerks 2 bestimmen.

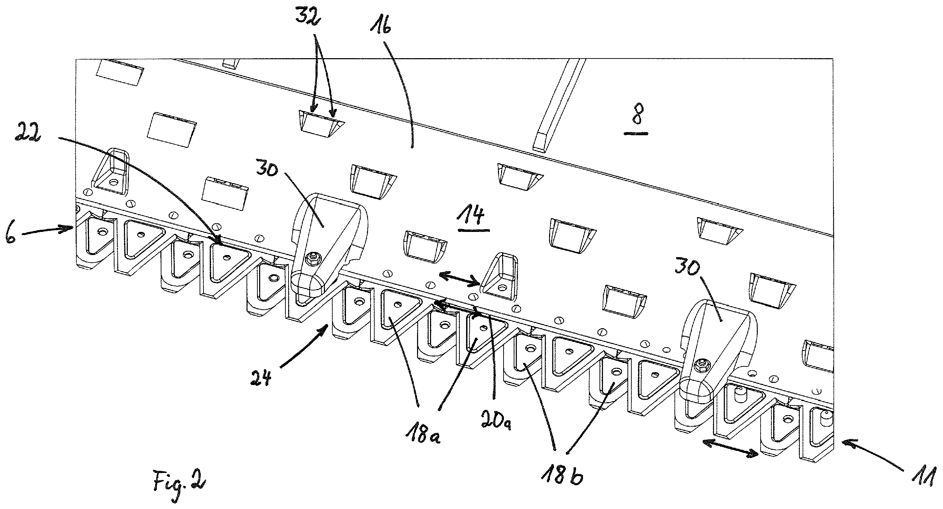

Die Fig. 2 zeigt eine vergrößerte Ausschnittansicht auf das Doppelmesser-Schnittsystem 11, das im Bereich des Messerbalkens 6 angeordnet ist. Bei dem Doppelmesser-Schnittsystem 11 sind ein erster Teil der am Schneidwerk 2 vorhandenen Messerklingen 18a an einem ersten Messerrücken 20a befestigt, wobei dieser erste Teil der Messerklingen 18a zusammen mit dem ersten Messerrücken 20a das Obermesser 22 bilden, und ein zweiter Teil der am Schneidwerk 2 vorhandenen Messerklingen 18b sind an einem zweiten Messerrücken 20b befestigt, wobei dieser zweite Teil der Messerklingen 18b zusammen mit dem zweiten Messerrücken 20b das Untermesser 24 bilden. Das Obermesser 22 und das Untermesser 24 sind gegenläufig angetrieben, so dass sich im Bereich der aufeinander zu bewegten Schnittkanten der Messerklingen 18a, 18b eine Art scherenartiger Schnitt ergibt, mit dem die Halme des Ernteguts abgeschnitten werden.

Im Übergangsbereich vom Doppelmesser-Schnittsystem 11 zur Ablagefläche 8 ist an dem Schneidwerk 2 eine Gleitfläche 14 ausgebildet. Die Gleitfläche 14 führt das Erntegut über den Höhen- und/oder Längenversatz zwischen den Ober- und Untermessern 22, 24 und der Ablagefläche 8. Die Gleitfläche 14 ist als Leiste 16 ausgebildet, die ortsfest mit dem Obermesser 22 verbunden ist. Wenn sich das Obermesser 22 hin und her bewegt, ist die Leiste 16 und damit auch die Gleitfläche 14 entsprechend in Bewegung.

Die Leiste 16 weist quer über die Arbeitsbreite des Schneidwerks 2 verteilt eine Anzahl von Luftaustrittsöffnungen 32 auf, die nach oben und/oder in Richtung der Ablagefläche 8 ausgerichtet sind. Aus den Luftaustrittsöffnungen 32 austretende Luft kann im Bereich der Gleitfläche 14 herabfallendes Erntegut erfassen und in Richtung der Ablagefläche 8 blasen, so dass dieses Erntegut nicht vor dem Messerbalken 6 auf den Ackerboden fällt und verloren geht.

Die Leiste 16 kann außerdem noch in den Bereichen, in denen sich Schwinghebel 34, 40 befinden, jeweils ausgeformte Abdeckungen 30 aufweisen, die die Schwinghebel 34, 40 gegen Erntegut und Schmutz abschirmen. Die Abdeckungen 30 können einteilig eingeformt in der Leiste 16 ausgebildet sein, wodurch die Montage vereinfacht und Fugen und Kanten vermieden werden, an denen sich Erntegut einklemmen und zu Materialpaketen aufbauen könnte.

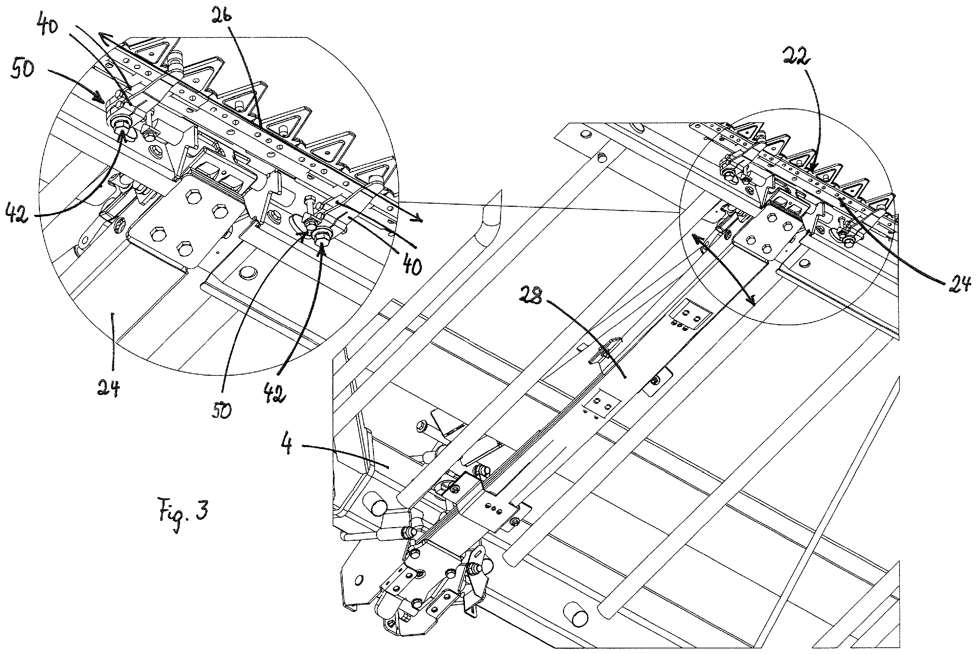

In Fig. 3 ist gezeigt, dass die Ober- und Untermesser 22, 24 über ihre Länge in Erstreckungsrichtung 26 hinweg an freien Enden von mehreren mit dem Rahmen 4 verbundenen Haltearmen 28 gehalten sind, die mit ihren freien Enden in voneinander unterschiedliche Höhenlagen beweglich sind. In der Fig. 3 ist beispielhaft einer der Haltearme 28 gezeigt, der im Ausführungsbeispiel als eine Blattfeder ausgeführt ist. Die Beweglichkeit des Haltearms 28 ist durch einen entsprechenden Doppelpfeil im Bereich von dessen freien Ende angedeutet. Durch die höhenbewegliche Halterung der Ober- und Untermesser 22, 24 können sich diese bei der Erntearbeit der Erntemaschine flexibel an eine unebene Bodenkontur anpassen. Fig. 3 zeigt auch, dass die das Obermesser 22 haltende und das Untermesser 24 haltende Schwinghebel 40 mit ihren jeweiligen schneidwerksseitigen Drehachsen 42 konzentrisch zueinander auf einer Lagerstelle 50 angeordnet sind.

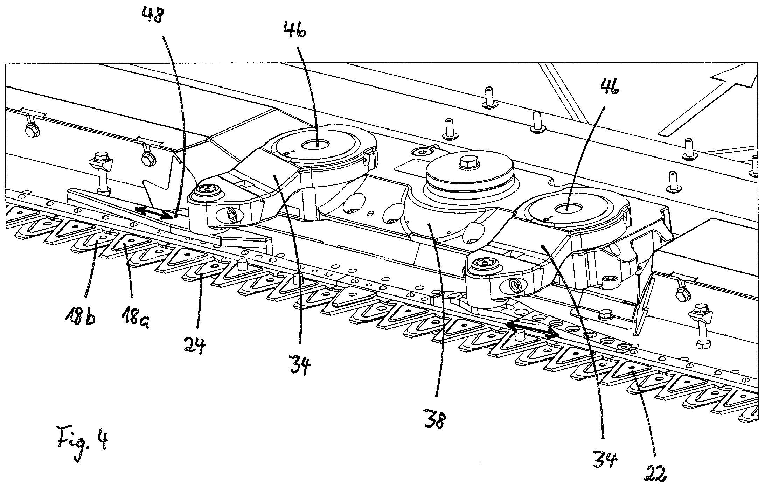

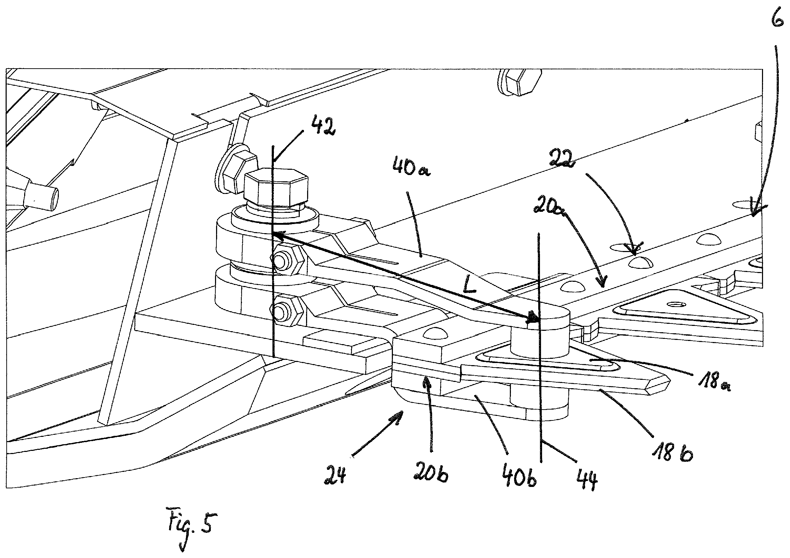

Die Fig. 4 zeigt eine vergrößerte Ansicht auf den Bereich des Messerbalkens 6, in dem ein Getriebe 38 angeordnet ist. Das Getriebe 38 ist im Schneidwerk 2 an einer Stelle zwischen den Seitenwänden 36 des Schneidwerks 2 angeordnet, bei nur einem Getriebe 38 im Schneidwerk 2 bevorzugt zumindest annähernd mittig zwischen den Seitenwänden 34. In dem Getriebe 38 wird eine von einer Antriebswelle in das Getriebe 38 eingebrachte rotierende Antriebsdrehzahl übersetzt in eine oszillierende Hin- und Herbewegung der Schwinghebel 34, mit denen das Obermesser 22 und das Untermesser 24 des Doppelmesser-Schnittsystems 11 antriebsverbunden sind. In Fig. 4 ist erkennbar, dass die Abtriebswellen 46 zum Antrieb der Schwinghebel 34 auf der Oberseite des Getriebes 38 aus dem Getriebegehäuse nach außen geführt sind. Dort sind sie mit den Schwinghebeln 34 verbunden, die sich aus einer Ebene oberhalb der Ebene der Ober- und Untermesser 22, 24 von den Abtriebswellen 46 in die Richtung der Ober- und Untermesser 22, 24 erstrecken. Die Schwinghebel 34 schieben die Ober- und Untermesser 22, 24 hin und her, wodurch die Messerklingen 18a, 18b Erntegut schneiden, das sich zwischen den Messerklingen 18a, 18b befindet. Mit nur einem Getriebe 38 können auf diese Weise beide Messer 22, 24 oszillierend angetrieben werden. Die Balance des Schneidwerks 2 um seine Längsmittelachse bleibt durch die zumindest annähernd mittige Anordnung des Getriebes 38 voll erhalten. Zudem sind die seitlichen Ränder des Schneidwerks 2 von dem Gewicht des Getriebes 38 und dem zugehörigen Antriebsstrang zum Getriebe 38 entlastet, was sich insbesondere bei größeren Arbeitsbreiten des Schneidwerks 2 von mehr als 8m deutlich entlastend auf die Gesamtkonstruktion auswirkt, weil dadurch auch der Rahmen 4 leichter ausgeführt werden kann. Die Fig. 4 zeigt auch, dass der Antriebsstrang von der Abtriebswelle 46 zum Untermesser 24 einen Abschnitt 48 aufweist, in dem der Schwinghebel 46 das Obermesser 22 bereichsweise umgreift. Die Fig. 5 zeigt eine Schnittansicht durch den Bereich des Messerbalkens 6. Das Obermesser 22 und das Untermesser 24 sind dort an Schwinghebeln 40 gehalten, die zwischen ihrer schneidwerksseitigen Drehachse 42 und der Drehachse 44, über die sie mit dem Obermesser 22 oder dem Untermesser 24 verbunden sind, dieselbe Länge L aufweisen wie die Schwinghebel 34, über die das Obermesser 22 und das Untermesser 24 mit dem Getriebe 38 verbunden sind. Die das Obermesser 22 und das Untermesser 24 haltenden Schwinghebel 40a, 40b sind mit ihren jeweiligen schneidwerksseitigen Drehachsen 42 konzentrisch zueinander angeordnet.

Die Erfindung ist nicht auf das vorstehende Ausführungsbeispiel beschränkt.

### Bezugszeichenliste

- 2: Schneidwerk
- 4: Rahmen
- 6: Messerbalken
- 8: Ablagefläche
- 10: Fördervorrichtung
- 11: Doppelmesser-Schnittsystem
- 12: Bandförderer
- 14: Gleitfläche
- 16: Leiste
- 18: Messerklinge
- 20: Messerrücken
- 22: Obermesser
- 24: Untermesser
- 26: Erstreckungsrichtung
- 28: Haltearm
- 30: Abdeckung
- 32: Luftaustrittsöffnung
- 34: Schwinghebel (Getriebe)
- 36: Seitenwand
- 38: Getriebe
- 40: Schwinghebel (Halterung)
- 42: schneidwerksseitigen Drehachse
- 44: messerseitige Drehachse
- 46: Abtriebswelle
- 48: Abschnitt
- 50: Lagerstelle

## Patentansprüche

1. Schneidwerk (2) zum Anbau an einen Mähdrescher mit einem Rahmen (4), einem Messerbalken (6), einer Ablagefläche (8) zur Ablage des geschnittenen Halmguts, Fördervorrichtungen (10) zum Abfördern des geschnittenen Halmguts, Antriebsvorrichtungen zum Antrieb des Messerbalkens (6) und der Fördervorrichtungen (10), wobei am Messerbalken (6) ein Doppelmesser-Schnittsystem (11) ausgebildet ist, bei dem ein erster Teil der am Schneidwerk (2) vorhandenen Messerklingen (18a) an einem ersten Messerrücken (20a) befestigt sind, wobei dieser erste Teil der Messerklingen (18a) zusammen mit dem ersten Messerrücken (20a) das Obermesser (22) bilden, und ein zweiter Teil der am Schneidwerk (2) vorhandenen Messerklingen (18b) an einem zweiten Messerrücken (20b) befestigt sind, wobei dieser zweite Teil der Messerklingen (18b) zusammen mit dem zweiten Messerrücken (20b) das Untermesser (24) bilden, das Obermesser (22) und das Untermesser (24) gegenläufig angetrieben sind, **dadurch gekennzeichnet, dass** das Schneidwerk (2) eine schräg in Förderrichtung des Ernteguts geneigte Gleitfläche (14) im Übergangsbereich vom Messerbalken (6) zur Ablagefläche (6) aufweist; und dass die Gleitfläche (14) als Leiste (16) ausgebildet ist, die ortsfest mit dem Obermesser (22) verbunden ist.

2. Schneidwerk (2) nach Anspruch 1, **dadurch gekennzeichnet, dass** die Ober- und Untermesser (22, 24) über ihre Länge in Erstreckungsrichtung (26) hinweg an den freien Enden von mehreren mit dem Rahmen (4) verbundenen Haltearmen (28) gehalten sind, die mit ihren freien Enden in voneinander unterschiedliche Höhenlagen beweglich sind.

3. Schneidwerk (2) nach Anspruch 1 oder 2, **dadurch gekennzeichnet, dass** die Ablagefläche (8) auf der nach oben weisenden Seite eines oder mehrerer umlaufend angetriebenen Bandförderer (12) ausgebildet ist.

4. Schneidwerk (2) nach einem der vorhergehenden Ansprüche, **dadurch gekennzeichnet, dass** die Leiste (16) quer über die Arbeitsbreite verteilt eine Anzahl von Luftaustrittsöffnungen (32) aufweist, die nach oben und/oder in Richtung der Ablagefläche (8) ausgerichtet sind.

5. Schneidwerk (2) nach einem der vorhergehenden Ansprüche, **dadurch gekennzeichnet, dass** in der Leiste (16) in den Bereichen, in denen sich Schwinghebel (34, 40) befinden, jeweils Abdeckungen (30) ausgeformt sind, die die Schwinghebel (34, 40) gegen Erntegut und Schmutz abschirmen.

6. Schneidwerk (2) nach einem der vorhergehenden Ansprüche, **dadurch gekennzeichnet, dass** das Schneidwerk (2) mehrteilig und die Leiste (16) an den Nahtstellen zwischen den Schneidwerksteilen flexibel und/oder geteilt ausgebildet ist.

7. Schneidwerk (2) nach einem der vorhergehenden Ansprüche, **dadurch gekennzeichnet, dass** das Ober- und Untermesser (24) des Doppelmesser-Schnittsystems (11) über Schwinghebel (34) mit einem Getriebe (38) antriebsverbunden sind, das an einer Stelle zwischen den Seitenwänden (36) des Schneidwerks (2) angeordnet ist.

8. Schneidwerk (2) nach Anspruch 7, **dadurch gekennzeichnet, dass** die Abtriebswellen (46) zum Antrieb der Schwinghebel (34) auf der Oberseite des Getriebes (38) aus dem Getriebegehäuse nach außen geführt sind und sich die Schwinghebel (34) in einer Ebene oberhalb der Ebene der Ober- und Untermesser (22, 24) von den Abtriebswellen (46) in die Richtung der Ober- und Untermesser (22, 24) erstrecken.

9. Schneidwerk (2) nach Anspruch 7 oder 8, **dadurch gekennzeichnet, dass** der Antriebsstrang von der Abtriebswelle (46) zum Untermesser (24) einen Abschnitt (48) aufweist, in dem der Schwinghebel (46) das Obermesser (22) bereichsweise umgreift.

10. Schneidwerk (2) nach einem der Ansprüche 7 bis 9, **dadurch gekennzeichnet, dass** das Obermesser (22) und das Untermesser (24) an Schwinghebeln (40) gehalten sind, die zwischen ihrer schneidwerksseitigen Drehachse (42) und der Drehachse (44), über die sie mit dem Obermesser (22) oder dem Untermesser (24) verbunden sind, dieselbe Länge aufweisen wie die Schwinghebel (34), über die das

11. Schneidwerk (2) nach einem der vorhergehenden Ansprüche, **dadurch gekennzeichnet, dass** das Obermesser (22) haltende und das Untermesser (24) haltende Schwinghebel (40) mit ihren jeweiligen schneidwerksseitigen Drehachsen (42) konzentrisch zueinander auf einer Lagerstelle (50) angeordnet sind.

12. Schneidwerk (2) nach einem der vorhergehenden Ansprüche, **dadurch gekennzeichnet, dass** die Schwinghebel (46) an ihren rahmen- und/oder messerseitigen Ende ein Rückstellkräfte aufbauendes Pufferelement aufweisen.

13. Schneidwerk (2) nach einem der vorhergehenden Ansprüche, **dadurch gekennzeichnet, dass** die Messerklingen (18a, 18b) mit einer unterschiedlichen Klingenteilung am Ober- und Untermesser (22, 24) angeordnet sind.

## Claims

1. Cutting assembly (2) for attachment to a combine harvester, comprising a frame (4), a cutter bar (6), a depositing surface (8) for supporting the cut crop material, conveyor devices (10) for conveying the cut crop material, drive devices for driving the cutter bar (6) and the conveyor devices (10), wherein a double blade cutting system (11) is formed on the cutter bar (6), in which a first part of the blade edges (18a) present on the cutting assembly (2) are attached at a first blade back (20a), wherein this first part of the blade edges (18a) together with the first blade back (20a) form the upper blade (22), and a second part of the blade edges (18b) present on the cutting mechanism (2) are attached at a second blade back (20b), wherein this second part of the blade edges (18b) together with the second blade back (20b) form the lower blade (24), the upper blade (22) and the lower blade (24) are driven in opposite directions, **characterized in that** the cutting assembly (2) has a sliding surface (14) in the transition region from the cutter bar (6) to the depositing surface (6), which sliding surface is formed obliquely inclined in the conveying direction of the crop material, and **in that** the sliding surface (14) is designed as a strip (16) which is fixedly connected to the upper blade (22).

2. Cutting assembly (2) according to Claim 1, **characterized in that** the upper and lower blades (22, 24) are held over their length in the direction of extent (26) at the free ends of several holding arms (28) connected to the frame (4), which are movable with their free ends to different heights relative to one another.

3. Cutting assembly (2) according to Claim 1 or 2, **characterized in that** the depositing surface (8) is formed on the upward-facing side of one or more belt conveyors (12) driven in continuous circulation.

4. Cutting assembly (2) according to one of the preceding claims, **characterized in that** the strip (16) has a number of air outlet openings (32) distributed across the working width, which openings are oriented upwards and/or in the direction of the depositing surface (8).

5. Cutting assembly (2) according to one of the preceding claims, **characterized in that** covers (30) are formed in the strip (16) in the areas where oscillating levers (34, 40) are located, and shield the oscillating levers (34, 40) from crop material and dirt.

6. Cutting assembly (2) according to one of the preceding claims, **characterized in that** the cutting unit (2) is formed of multiple parts and the strip (16) is designed to be flexible and/or divided at the joints between the cutting assembly parts.

7. Cutting assembly (2) according to one of the preceding claims, **characterized in that** the upper and lower blades (24) of the double blade cutting system (11) are connected in terms of drive via oscillating levers (34) to a gear (38) which is arranged at a point between the side walls (36) of the cutting assembly (2).

8. Cutting assembly (2) according to Claim 7, **characterized in that** the output shafts (46) for driving the oscillating levers (34) are guided outwards from the gear housing on the upper side of the gear (38) and the oscillating levers (34) extend in a plane above the plane of the upper and lower blades (22, 24) from the output shafts (46) in the direction of the upper and lower blades (22, 24).

9. Cutting assembly (2) according to Claim 7 or 8, **characterized in that** the drive train from the output shaft (46) to the lower blade (24) has a section (48) in which the oscillating lever (46) partially surrounds the upper blade (22).

10. Cutting assembly (2) according to one of Claims 7 to 9, **characterized in that** the upper blade (22) and the lower blade (24) are held on oscillating levers (40) which, between their cutting assembly-side axis of rotation (42) and the axis of rotation (44) via which they are connected to the upper blade (22) or the lower blade (24), have the same length as the oscillating levers (34) via which the upper blade (22) and the lower blade (24) are connected to the gear (38).

11. Cutting assembly (2) according to one of the preceding claims, **characterized in that** the oscillating levers (40) holding the upper blade (22) and the lower blade (24) are arranged concentrically with each other on a bearing point (50) with their respective cutting assembly-side axes of rotation (42).

12. Cutting assembly (2) according to one of the preceding claims, **characterized in that** the oscillating levers (46) have a buffer element at their frame-side and/or blade-side ends which builds up restoring forces.

13. Cutting assembly (2) according to one of the preceding claims, **characterized in that** the blade edges (18a, 18b) are arranged with different blade pitches on the upper and lower blades (22, 24).

## Revendications

1. . Mécanisme de coupe (2) destiné à être monté sur une moissonneuse-batteuse, avec un châssis (4), une barre de coupe (6), une surface de dépose (8) pour déposer la paille coupée, des dispositifs de transport (10) pour évacuer la paille coupée, des dispositifs d'entraînement pour entraîner la barre de coupe (6) et les dispositifs de transport (10),
un système de coupe à double lame (11) étant formé sur la barre de coupe (6), dans lequel une première partie des sections de coupe (18a) présentes sur le mécanisme de coupe (2) est fixée sur un premier dos de lame (20a), ladite première partie des sections de coupe (18a) formant conjointement avec le premier dos de lame (20a) la lame supérieure (22), et une deuxième partie des sections de coupe (18b) présentes sur le mécanisme de coupe (2) est fixée sur un deuxième dos de lame (20b), ladite deuxième partie des sections de coupe (18b) formant conjointement avec le deuxième dos de couteau (20b) la lame inférieure (24), la lame supérieure (22) et la lame inférieure (24) étant entraînées dans des directions opposées, **caractérisé en ce que** le mécanisme de coupe (2) comporte, dans la zone de transition de la barre de coupe (6) à la surface de dépôt (6), une surface de glissement (14) inclinée obliquement dans la direction de transport des produits de récolte ; et que la surface de glissement (14) est formée comme une baguette (16) qui est reliée fixement à la lame supérieure (22).

2. . Mécanisme de coupe (2) selon la revendication 1, **caractérisé en ce que** les lames supérieure et inférieure (22, 24) sont maintenues sur les extrémités libres de plusieurs bras de maintien (28) reliés au châssis (4) au-delà de leur longueur dans la direction d'extension (26).

3. . Mécanisme de coupe (2) selon la revendication 1 ou 2, **caractérisé en ce que** la surface de dépôt (8) est formée sur le côté pointant vers le haut d'un ou de plusieurs convoyeurs à bande (12) entraînés en rotation.

4. . Mécanisme de coupe (2) selon l'une des revendications précédentes, **caractérisé en ce que** la baguette (16) comporte selon une répartition transversalement sur la largeur de travail un nombre d'ouvertures de sortie d'air (32), qui sont orientées vers le haut et/ou en direction de la surface de dépôt (8).

5. . Mécanisme de coupe (2) selon l'une des revendications précédentes, **caractérisé en ce que** sont formés dans la baguette (16) dans les zones, dans lesquelles se trouvent des leviers oscillants (34, 40), respectivement des recouvrements (30), qui protègent les leviers oscillants (34, 40) des produits de récolte et des saletés.

6. . Mécanisme de coupe (2) selon l'une des revendications précédentes, **caractérisé en ce que** le mécanisme de coupe (2) est formé en plusieurs parties et la baguette (16) est formée de manière flexible et/ou divisée sur les jointures entre les parties de mécanisme de coupe.

7. . Mécanisme de coupe (2) selon l'une des revendications précédentes, **caractérisé en ce que** les lames supérieure et inférieure (24) du système de coupe à double lame (11) sont reliées en entraînement par des leviers oscillants (34) à une transmission (38) qui est disposée sur un emplacement entre les parois latérales (36) du mécanisme de coupe (2).

8. . Mécanisme de coupe (2) selon la revendication 7, **caractérisé en ce que** les arbres de sortie (46) pour entraîner les leviers oscillants (34) sont guidés vers l'extérieur hors du carter de transmission sur le côté supérieur de la transmission (38) et les leviers oscillants (34) s'étendent dans un plan au-dessus du plan des lames supérieure et inférieure (22, 24) depuis les arbres de sortie (46) dans la direction des lames supérieure et inférieure (22, 24).

9. . Mécanisme de coupe (2) selon la revendication 7 ou 8, **caractérisé en ce que** la chaîne cinématique comporte depuis l'arbre de sortie (46) à la lame inférieure (24) une section (48), dans laquelle le levier oscillant (46) entoure par endroits la lame supérieure (22).

10. . Mécanisme de coupe (2) selon l'une des revendications 7 à 9, **caractérisé en ce que** la lame supérieure (22) et la lame inférieure (24) sont maintenues sur des leviers oscillants (40), qui présentent, entre leur axe de rotation côté mécanisme de coupe (42) et l'axe de rotation (44), par lequel ils sont reliés à la lame supérieure (22) ou à la lame inférieure (24), la même longueur que les leviers oscillants (34), par lesquels la lame supérieure (22) et la lame inférieure (24) sont reliées à la transmission (38).

11. . Mécanisme de coupe (2) selon l'une des revendications précédentes, **caractérisé en ce que** des leviers oscillants (40) maintenant la lame supérieure (22) et maintenant la lame inférieure (24) sont disposés par leurs axes de rotation côté mécanisme de coupe (42) respectifs de manière concentrique les uns par rapport aux autres sur un emplacement de montage (50).

12. . Mécanisme de coupe (2) selon l'une des revendications précédentes, **caractérisé en ce que** les leviers oscillants (46) comportent sur leur extrémité côté châssis et/ou côté lame, un élément tampon mettant en place des forces de rappel.

13. . Mécanisme de coupe (2) selon l'une des revendications précédentes, **caractérisé en ce que** les sections de coupe (18a, 18b) sont disposées sur la lame supérieure et la lame inférieure (22, 24) avec une répartition de section différente.
